# EUROPEAN PATENT APPLICATION

(11) **EP 1 619 108 A1**
(43) Date of publication of application: **25.01.2006**
(21) Application number: 05106581.1
(22) Date of filing: 18.07.2005
(51) Int. Cl.: B62D 25/16

(54) **Mudguard for lorries and similar vehicles and related anchor bracket on vehicle's frame**

(30) Priority: 19.07.2004 IT TO20040501
(71) Applicant: Lago Accessori S.r.l., 35014 Fontaniva (IT)
(72) Inventor: Lago, Fabio, 35013 Cittadella (IT)
(74) Representative: Jorio, Paolo

(57) **Abstract**

Anchor bracket (2) for fixing mudguards (1) to vehicle frame on lorries and similar vehicles, consisting of a flat plate (5) and of a tubular sleeve (6) that projects over the upper face of the flat plate (5) coaxially to a longitudinal axis (A) substantially parallel to the surface of the same face, is rigidly connected to the flat plate (5) and is sized in such a way that it can pass through and occupy a special through opening (4a) obtained from the body (4) of the mudguard (1) so that it completely projects from the opposite side of the body (4) leaving the flat plate (5) located against the surface of said body; the aforementioned tubular sleeve (6) also being equipped with a central through hole (6a) which extends coaxially to the longitudinal axis (A) and is shaped in such a way that it can be fitted onto a special support bar (3) that projects out from the frame of the vehicle; the anchor bracket (2) also being equipped with snaplock release devices (9) designed to elastically deform against the body (4) of the mudguard (1) following the insertion of the tubular sleeve (6) into the through opening (4a) and then to return elastically to their original position when the upper face of the flat plate (5) has come into contact with the surface (4b) of the body (4), rigidly securing the anchor bracket (2) to the mudguard (1).

## Description

This invention is relative to a mudguard for lorries and similar vehicles and to its related anchor bracket securing it to the vehicle's frame.

As is well known, in most lorries, articulated lorries, trucks and similar vehicles, the mudguards are generally made of semi-cylindrical shells in plastic or metal material, sometimes divided into modular pieces, and are fixed to the frame of the vehicle using anchor brackets that are structured so as to be able to hook the aforementioned shells to special horizontal support bars that extend projecting out from the side flanks of the frame, remaining substantially perpendicular to the middle vertical plane of the vehicle.

Currently the anchor brackets most widely used consist of a mudguard fixing plate shaped so that it can be anchored onto the outside surface of the shell that makes up the mudguard using through bolts, rivets and the like, and of a semi-rigid blocking band of cylindrical tubular shape that is machined in one piece on the upper side of the fixing plate so that it can be fitted onto the horizontal support bar that projects out from the vehicle's frame. In more detail, the semi-rigid blocking band is designed to be fitted and then tightened onto the support bar using a special tightening screw that links together the two opposite end edges of the same band.

Although they generally meet requirements, the anchor brackets described above have the major disadvantage of requiring a long time to assemble, which has a heavy impact on the overall costs incurred for outfitting the vehicle. Anchoring the fixing plate to the mudguard using the fixing systems described above is indeed relatively laborious, and requires particular care when positioning the piece, with all the disadvantages that this brings with it.

The purpose of this invention is therefore to create a new type of mudguard for lorries and similar vehicles and a new type of anchor bracket fixing it to the vehicle's frame which, working together, make it possible to fix the mudguard to the frame extremely quickly, drastically reducing the overall assembly time.

According to the present invention, there is provided a bracket for fixing mudguards to vehicle frame on lorries and similar vehicles, characterised by comprising a flat plate and a tubular sleeve which projects out above the upper face of said flat plate coaxially to a longitudinal axis substantially parallel to the surface of the same face; said tubular sleeve being rigidly connected to the flat plate and being sized so that it can pass through a special through opening obtained in the body of said mudguard so that it can project entirely from the opposite side of said body leaving the flat plate located against the surface of the same; said tubular sleeve being also provided with a central through hole which extends coaxially to said longitudinal axis and is shaped so that it can be fitted onto a special support bar which projects out from the frame of the vehicle; said anchor bracket being also provided with snaplock release devices designed to deform elastically against the body of the mudguard following the insertion of the tubular sleeve into said through opening and to then return elastically to their original position when the upper face of the flat plate has come into contact with the surface of said body, rigidly securing the anchor bracket onto the mudguard.

According to the present invention, there is also provided a mudguard for lorries and similar vehicles which comprises at least one rigid casing shaped so as to have substantially the form of a portion or sector of cylindrical shell; the mudguard being characterised in that said rigid casing is provided with at least one through opening inside which an anchor bracket made according to any one of the previous claims is designed to be inserted and secured.

This invention will now be described with reference to the enclosed drawings, which illustrate a non-limiting example of realization, in which:
- figure 1 illustrates in a perspective view a mudguard for lorries and similar, and a series of anchor brackets designed to secure the aforementioned mudguard to the frame of the vehicle, all made according to the precepts of this invention;
- figure 2 is a perspective view in enlarged scale of the anchor bracket illustrated in figure 1;
- figure 3 is a section view of the anchor bracket illustrated in figure 2; while
- figure 4 is a side view of the anchor bracket illustrated in figure 2.

With reference to drawings 1, 2, 3 and 4, the number 1 indicates in its entirety a mudguard specifically made and sized to be assembled on lorries, articulated lorries, trucks and similar vehicles, while the number 2 indicates in their entirety each of the anchor brackets specifically made and sized so that mudguard 1 can be quickly and safely secured onto the special support bar or bars 3, which project out overhanging the side flank of the vehicle's frame (not illustrated).

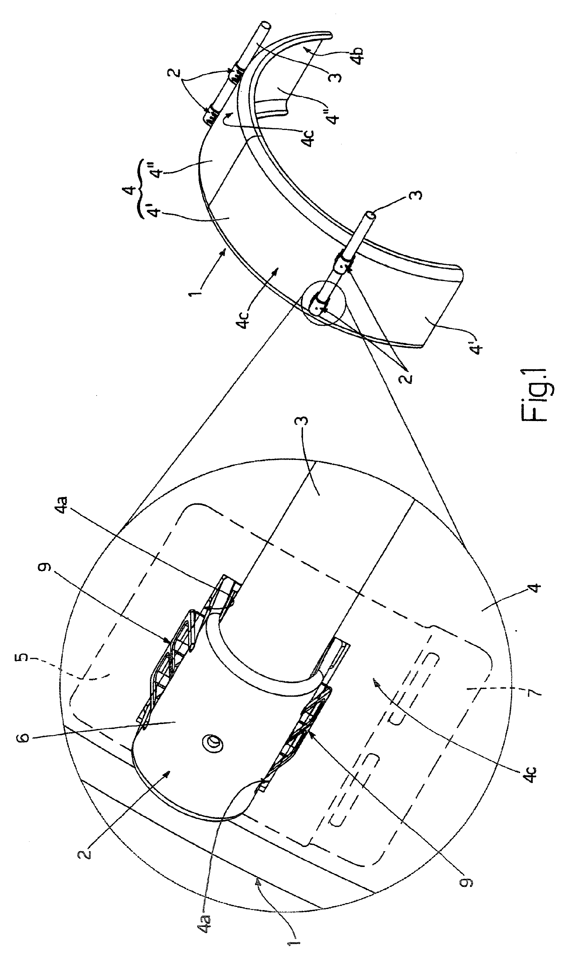

With reference to figure 1, in the same way as currently known mudguards, mudguard 1 is made up of an external rigid casing 4 in plastic or metal material that is shaped so as to have the shape substantially of a portion or sector of cylindrical shell with curved side edges, and possibly of a series of grills or panels to gather sprayed water (of a well known type and not illustrated) which are positioned inside the rigid casing 4 and are shaped so that they can condense and convey downwards the sprayed water produced by the rolling of the tire on wet asphalt. Unlike traditional mudguards, the rigid casing 4 is in any case equipped with one or more through openings 4a preferably, but not necessarily, of a rectangular shape, inside which the anchor brackets 2 are meant to be inserted and secured, as will be better explained below.

In the example illustrated, specifically, the mudguard 1 is made up of a pair of symmetrical, opposed rigid casings 4' and 4" that are placed alongside each other so that they form a semi-cylindrical shell with curved side edges, or rather a sector of cylindrical shell with curved side edges delimited by an angle which is substantially equal to 180°. Each rigid casing 4' and 4" is also equipped with a couple of through openings 4a of a rectangular shape which are obtained from the body of the casing so that they are aligned next to each other along a directrix parallel to the generating straight line of the cylindrical shell itself.

In other words, the longer side edges of the two through openings 4a of each rigid casing 4' and 4" are aligned against each other and are parallel to the generating straight line of the cylindrical shell.

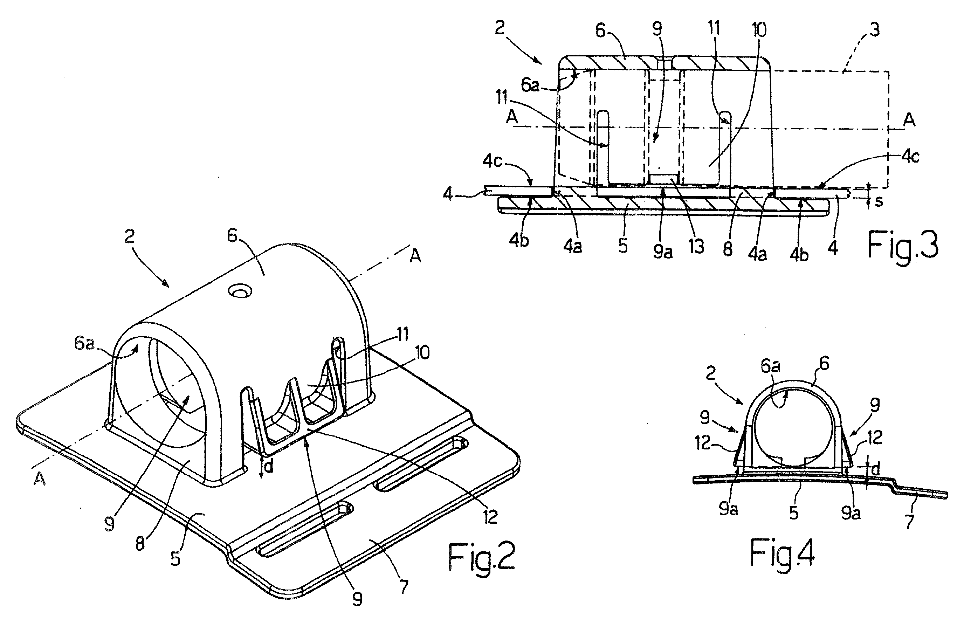

With reference to figures 2 and 3, the anchor bracket is instead made up of a flat plate 5, preferably but not necessarily of a rectangular shape, and of a tubular sleeve 6 which projects out above the upper face of the flat plate 5 coaxially to a longitudinal axis A which is preferably, but not necessarily, parallel to the same face, and is connected rigidly to the flat plate 5 itself.

With reference to figures 1 and 3, the tubular sleeve 6 is also sized so that it can pass through any of the through openings 4a found on the rigid casing 4, so that it can completely project out from the opposite side of the rigid casing 4 leaving the flat plate 5 located against the surface of said casing. In greater detail, the tubular sleeve 6 is sized so that it can pass through the through opening 4a so that it projects out from the exterior of mudguard 1, or rather from the exterior of the rigid casing 4, bringing the flat plate 5 to locate against the inside surface of said mudguard 1, or in other words to locate against the internal surface 4b of the rigid casing 4.

In addition to that described above, the tubular sleeve 6 is finally equipped with a central through hole 6a which extends coaxial to longitudinal axis A and is shaped in such a way that is has a cross section that is substantially complementary to that of the support bar 3, so that it can hold inside it a section of the same support bar 3.

With reference to figures 1, 2 and 3, in the example illustrated, in particular, the flat plate 5 has an elongated rectangular shape with rounded corners and is slightly curved so that it can follow the curvature of the portion of rigid casing 4 around the through opening 4a.

Preferably, but not necessarily, the flat plate 5 is also equipped with a projecting flat appendix 7 which projects out from a longer side edge of the flat plate 5 so that it can act as an anchoring element for any panels collecting sprayed water that may be positioned inside the rigid casing 4.

Whereas with regard to the tubular sleeve 6, in the example illustrated its two axial ends are rigidly connected to the upper face of the flat plate 5 through two spacer plates 8 that make it possible to make the tubular sleeve 6 in one piece with the flat plate 5. Furthermore, in the example illustrated the support bar 3 is of a cylindrical shape so that the central through hole 6a of the tubular sleeve 6 has a circular section.

With reference to figures 1, 2 and 3, the anchor bracket 2 is also equipped with snaplock release devices 9 which are designed to elastically deform against the rigid casing 4 after the tubular sleeve 6 has been inserted into the corresponding through opening 4a, and then to return elastically to their original position when the upper face of the flat plate 5 has come into contact with the inner surface 4b of the rigid casing 4, thereby rigidly securing the anchor bracket 2 onto the body of the rigid casing 4, or in other words onto the body of the mudguard 1.

In other words, the anchor bracket 2 is equipped with one or more flexible locking elements 9 that are able to lock via a snaplock release system the anchor bracket 2 itself to the mudguard 1 when the tubular sleeve 6 is inserted into the through opening 4a of the rigid casing 4 until the flat plate 5 is brought to locate against the internal surface 4b of the rigid casing 4, or rather to locate against the inner surface of the mudguard 1.

In greater detail, in the example illustrated, the anchor bracket 2 is equipped with one or more flexible locking elements 9 which extend projecting over the body of the tubular sleeve 6 or of the flat plate 5, are equipped with an end section 9a positioned over the upper face of the flat plate 5, and are designed to deform elastically against the rigid casing 4 so as to allow the tubular sleeve 6 to be inserted into the corresponding through opening 4a, and then to return elastically to their original position when the upper face of the flat plate 5 has come into contact with the internal surface 4b of the rigid casing 4, bringing the aforementioned end section 9a into direct contact with the outside surface of the mudguard 1, or in other words into direct contact with the external surface of the rigid casing 4, so as to rigidly secure the anchor bracket 2 onto the body of the rigid casing 4, or in other words onto the body of the mudguard 1.

With reference to figures 2 and 4, in the example illustrated, in particular, the flexible locking elements 9 are two in number, they are positioned on opposite sides of the tubular sleeve 6 and each of them comprises a curved flexible tab 10, obtained in one piece on the wall of the centre section of the tubular sleeve 6 by a through slit 11 substantially in a U shape, and a projecting part 12 which is cuneiform and projects out from the end tip of the flexible tab 10 towards the exterior of the tubular sleeve 6 and is directed so that its heel is turned towards the upper face of the flat plane 5 so that it can locate itself against the external surface 4c of the rigid casing 4, then going on to define the end section 9a of the flexible locking element 9.

In greater detail, with reference to figure 2 and 4, the through slits 11 which delimit the two flexible tabs 10 are obtained on the body of the sleeve in symmetrical position, from opposite sides of the longitudinal middle plain of the tubular sleeve 6, so that the two flexible tabs 10 are arranged one facing the other and can therefore flex towards each other.

In addition to the above, in the example illustrated, the through slits 11 that delimit the two flexible tabs 10 have their central section in common, and the projecting part 12 of each flexible locking element 9 is shaped whereby its heel is equipped with a flat surface of bearing location, indicated once again for sake of convenience with the number 9a, which extends parallel and facing the upper face of the flat plane 5, at a distance **d** from the latter whose value approximates by excess the value of the thickness **s** of the rigid casing 4 around the perimeter of the through opening 4a.

With reference to figures 3 and 4, lastly each flexible locking element 9 is preferably, but not necessarily, also equipped with a second projecting part 13 which is substantially cuneiform, and which projects out from the end tip of the flexible tab 10 towards the inside of the tubular sleeve 6 so that it can occupy an annular groove made specifically for that purpose in the body of the support bar 3.

The assembly of the mudguard 1 on the support bars 3 that project out from the lateral flanks of the frame (not illustrated) is extremely quick and involves, firstly, coupling an anchor bracket 2 into each through opening 4a present in the rigid casing 4, taking care to make the tubular sleeve 6 project completely from the bracket towards the exterior of the mudguard 1 and to take the flat plate 5 of the same bracket to locate against the inside surface of the mudguard 1, in other words to locate against the inside surface 4b of the rigid casing 4.

Obviously the positioning of the flat plate 5 located against the inside surface of the mudguard 1 provokes the snaplock closure of the flexible locking elements 9 on the anchor bracket 2, in other words the end tips of the two flexible tabs 10 temporarily approach each other so as to allow the tubular sleeve 6 to pass through the corresponding through opening 4a in the rigid casing 4, with the resulting rigid securing of the anchor bracket 2 itself on the rigid casing 4, in other words on the body of the mudguard 1.

Once the four anchor brackets 2 have been inserted and secured into their corresponding through openings 4a obtained from the rigid casing 4, the mudguard 1 can be mounted on the frame of the vehicle quickly and safely, fitting the various tubular sleeves 6 that project outside the mudguard 1 in their corresponding support bars 3 which project out from the lateral flanks of the frame.

In conclusion to the above, it is appropriate to specify that the insertion of the support bars 3 into the central through hole 6a of each tubular sleeve 6 prevents any further elastic deformation of the flexible locking elements 9, therefore making it impossible for the anchor brackets 2 to detach from the rigid casing 4, in other words from the mudguard 1. Indeed, the presence of the support bars 3 inside the tubular sleeve 6 impedes the end tips of the two flexible tabs 10 from approaching each other again so as to allow the tubular sleeve 6 to withdraw out of the through opening 4a.

The advantages given by the mudguard 1 and by the anchor brackets 2 described above and illustrated are clear: thanks to their special structure, the mudguards 1 and the anchor brackets 2 can be joined together quickly and safely without use of through bolts, rivets and similar, and even more importantly, without the possibility of mistakes in positioning, drastically reducing assembly times.

The mudguards 1 and the anchor brackets 2 also have the remarkable advantage of being able to be made entirely out of plastic material through moulding, helping to further reduce the production costs of the pieces.

Finally, it is clear that changes and variations can be made to the mudguard 1 and the anchor bracket 2 described and illustrated herein, within the scope of the present invention.

Specifically, according to a simplified form of realization, the snaplock release devices 9, instead of being made up of two flexible locking elements 9 arranged on opposite sides of the tubular sleeve 6, can be made up by a projecting part that projects out and rigidly from one side of the tubular sleeve 6 and by a single flexible locking element obtained from the opposite side of the tubular sleeve 6.

According to a further variation that is not illustrated, the snaplock release devices 9 can be made up of a series of flexible locking elements suitably distributed on the upper face of the flat plate 5, each of which is formed by a flexible hooked tab, that project out from the upper face of the flat plate 5, perpendicularly to the face itself, and is shaped in such a way that it can hook onto the body of the rigid casing 4 occupying a corresponding through slit obtained on the rigid body 4 around the through opening 4a.

## Claims

1. Anchor bracket (2) for fixing mudguards (1) to vehicle frame on lorries and similar vehicles, **characterised by** comprising a flat plate (5) and a tubular sleeve (6) which projects out above the upper face of said flat plate (5) coaxially to a longitudinal axis (A) substantially parallel to the surface of the same face; said tubular sleeve (6) being rigidly connected to the flat plate (5) and being sized so that it can pass through a special through opening (4a) obtained in the body (4) of said mudguard (1) so that it can project entirely from the opposite side of said body (4) leaving the flat plate (5) located against the surface of the same; said tubular sleeve (6) being also provided with a central through hole (6a) which extends coaxially to said longitudinal axis (A) and is shaped so that it can be fitted onto a special support bar (3) which projects out from the frame of the vehicle; said anchor bracket (2) being also provided with snaplock release devices (9) designed to deform elastically against the body (4) of the mudguard (1) following the insertion of the tubular sleeve (6) into said through opening (4a) and to then return elastically to their original position when the upper face of the flat plate (5) has come into contact with the surface (4b) of said body (4), rigidly securing the anchor bracket (2) onto the mudguard (1).

2. Anchor bracket according to claim 1, **characterised in that** said snaplock release devices (9) comprise at least one flexible locking element (9) which projects out from the tubular sleeve (6) or from the flat plate (5), is provided with an end section (9a) positioned over the upper face of the flat plate (5) and is designed to deform elastically against the body (4) of the mudguard (1) in such a way as to allow the insertion of the tubular sleeve (6) into the corresponding through opening (4a), and then to return elastically to its original position when the upper face of the flat plate (5) has come into contact with the inner surface (4b) of the body (4) of said mudguard, taking said end section (9a) into contact with the external surface (4c) of the body (4) of said mudguard (1) so as to rigidly secure the anchor bracket (2) onto the body (4) of the mudguard (1).

3. Anchor bracket according to claim 2, **characterised in that** said snaplock release devices (9) comprise two flexible locking elements (9) positioned on opposite sides of said tubular sleeve (6).

4. Anchor bracket according to claim 3, **characterised in that** each said flexible locking element (9) comprises a curved flexible tab (10), obtained in one piece on the wall of said tubular sleeve (6) via a through slit (11) which is substantially U-shaped, and a first projecting part (12) which projects out from the end tip of the flexible tab (10) towards the outside of said tubular sleeve (6) and is directed so that its heel (9a) is turned towards the upper face of the flat plate (5) so that it can locate itself against the outside surface (4c) of the body (4) of the mudguard (1).

5. Anchor bracket according to claim 4, **characterised in that** each said flexible locking element (9) also comprises a second projecting part (13) which projects out from the end tip of said flexible tab (10) towards the inside of the tubular sleeve (6) in such a way that it can occupy an annular groove especially obtained for that purpose from the body of said support bar (3).

6. Anchor bracket according to any one of the previous claims, **characterised in that** said tubular sleeve 6 is made in one piece with said flat plate 5.

7. Anchor bracket according to claim 6, **characterised in that** said tubular sleeve 6 is rigidly connected to the flat plate 5 through two spacer plates 8 positioned at the two axial ends of the sleeve itself.

8. Anchor bracket according to any one of the previous claims, **characterised in that** the flat plate (5) is equipped with a projecting flat appendix (7) which projects out from one side edge of the flat plate (5) so that it can act as an anchoring element for any panels for collecting sprayed water positioned inside the body (4) of said mudguard (1).

9. Mudguard (1) for lorries and similar vehicles comprising at least one rigid casing (4) shaped so as to have substantially the form of a portion or sector of cylindrical shell; the mudguard (1) being **characterised in that** said rigid casing (4) is provided with at least one through opening (4a) inside which an anchor bracket (2) made according to any one of the previous claims is designed to be inserted and secured.
